# EUROPEAN PATENT SPECIFICATION

(11) **EP 3 114 380 B1**
(45) Date of publication and mention of the grant of the patent: **08.07.2020**
(21) Application number: 15707760.3
(22) Date of filing: 27.02.2015
(51) Int. Cl.: F16K 5/20, F16K 27/06

(54) **VALVE ASSEMBLY**
VENTILANORDNUNG
ENSEMBLE SOUPAPE

(30) Priority: 07.03.2014 GB 201404054
(43) Date of publication of application: 11.01.2017
(73) Proprietor: Crane Limited, Ipswich, Suffolk IP3 9QH (GB)
(72) Inventor: LANCASTER, Michael, Ipswich Suffolk IP3 9QH (GB); WELFARE, Andrew, Ipswich Suffolk IP3 9QH (GB)
(74) Representative: Cawley, Aimee Elizabeth
(86) International application number: PCT/GB2015/050591
(87) International publication number: WO 2015/132566

(56) References cited:
- DE-A1- 2 245 311
- DE-A1- 2 615 296
- DE-A1- 3 214 918
- DE-A1- 3 618 321
- DE-A1- 3 716 206
- DE-U1- 8 414 099

## Description

The present invention relates generally to valve assemblies as are typically provided on fluid supply lines to enable fluid flow to be regulated. The invention relates more particularly to a safety valve assembly which can be connected between inlet and outlet pipework to enable electrical isolation therebetween.

Fluids are typically delivered to buildings using an interconnected pipework system comprising a network of mains supply lines. Such fluids are generally supplied at one or more central sources and are pumped through the pipework system at high pressure to ensure that fluid is transmitted across the entire network.

Fluid pipework must be robust to resist the high pressures exerted by fluid being pumped therethrough and also to resist damage caused by weathering and general wear and tear. Fluid pipework is typically, therefore, composed of high strength, durable materials, such as metals. Many metals are conductive and this presents a risk that fluid contained within metal pipework may be exposed to an electrical connection. When pipework is used to transport flammable and/or explosive fluids, such as natural gas, there is a risk that an electrical charge could ignite the fluid, thus triggering a fire and/or explosion.

Regulatory building safety measures often require that pipework is electrically isolated from the mains network by an electrical isolation system fitted to each building. This ensures that, should an electrical contact be made with the pipework provided within a building, then electrical current is not transmitted to the entire mains network.

Prior art electrical isolation systems provide a pipework fitting composed of electrically insulating material (typically plastic) which is provided between the mains supply line and the building pipework. Typically, such a fitting is located adjacent to other safety measures, such as an emergency control valve (ECV). Building regulations require that an ECV is installed on gas pipework in residential buildings so that fluid flowing to the building can be "shut-off" in case of emergency.

Prior art systems are, however, not optimal. Plastic pipework is susceptible to fire damage, and hence could result in a significant gas leak following a fire. Also, since such prior art systems utilise an *additional* pipework fitting, this is not optimal from the perspective of space and cost. Furthermore, there is the potential for the fitting to be omitted during pipework installation.

Other prior art electrical isolation systems utilise an integrated solution in which the ECV itself is provided with an electrical isolation means. In such systems, the ECV is made up of a stack of parts having an inlet portion which is electrically isolated from an outlet portion by an intermediate non-conducting barrier, such as a non-conducting washer. Such prior art systems are, however, susceptible to bending loads. Such bending loads might be encountered during building collapse following a fire, might be applied to the valve assembly during installation, or might occur due to expansion/contraction (e.g. due to thermal expansion) of components of the valve assembly or adjoining pipework. Bending loads can cause the electrically isolated portions of the system to come into contact with one another and thereby create an electrical connection therebetween. Additionally, prior art systems often utilise intermediate non-conducting barriers composed of materials which are susceptible to fire damage (such as plastics). If a fire were to damage or destroy such a plastic barrier then its ability to isolate the inlet portion and outlet portion would be compromised.

DE 3618321 A1 discloses a ball cock gas valve having both electrically-insulating and heat-resistant properties.

DE 2245311 discloses an electrically insulated gas cock connection.

It is therefore an object of the invention to obviate or mitigate the abovementioned disadvantages and to provide an improved safety valve assembly.

According to the present invention there is provided a safety valve assembly for connection to a fluid supply line, comprising:
i) a valve unit, having a first end and a second end defining an axis therebetween, said valve unit comprising a valve between said first and second ends; and
ii) a connection fitting for fluidly connecting the first end of the valve unit to the fluid supply line, the connection fitting comprising:
   a) a first tubular member fittable to, or integral, with the first end of the valve unit,
   b) a second tubular member adapted for receiving the fluid supply line, and
   c) a pair of washers locatable between said first and second tubular members so as to maintain the first tubular member in a non-contacting arrangement relative to the second tubular member to restrict relative movement therebetween;
wherein one of the first and second tubular members is locatable within the other tubular member, each washer in the pair of washers is positioned in an axially spaced relationship relative to the other washer, and wherein each washer is composed of electrically insulating, thermally resistant material, thereby enabling electrical isolation of the first and second tubular members from one another and wherein the electrically insulating, thermally resistant material is a ceramic material.

The valve assembly of the present invention is particularly suited for use with pipework supplying gaseous fluids, such as natural gas which is supplied to residential buildings for heating and cooking purposes. For the purposes of clarity in the remainder of the description, the present invention will be described in the context of natural gas supplied to residential buildings. As will be appreciated, however, the safety valve assembly of the present invention has application to other fluids, such as liquids, particularly flammable and/or explosive liquids, such as petroleum. Equally, the safety valve assembly of the present invention has application for use with pipework supplying non-residential buildings, such as commercial buildings or even pipework for supplying gas externally of buildings. The skilled person will readily understand the applicability of this invention to other such applications and the remaining description should not be construed as being limited only to applications utilising natural gas in residential buildings.

The valve assembly of the present invention provides a number of advantages over prior art assemblies as set out more fully below. The valve assembly provides an integrated system by which gas pipework within residential buildings can be shut off from the mains supply in case of emergency, while also ensuring that the building pipework is electrically isolated from the mains supply. Having such an integrated system ensures that, since a gas shut off *must* be installed when installing residential pipework (due to building safety regulations), there is no risk that the electrical isolation system will not also be installed. The assembly of the present invention thus provides a compact, single piece solution for providing a shut off from the mains supply in case of emergency which also electrically isolates residential pipework from the mains.

The spaced relationship of the pair of washers gives the assembly resistance to mechanical bending loads. Such loads might be encountered during building collapse following a fire, might be applied to the valve assembly during installation, or might occur due to expansion/contraction (e.g. due to thermal expansion) of components of the valve assembly or adjoining pipework. The spaced relationship of the washers ensures that bending loads applied to the assembly are spread across both washers. This mitigates point loading problems which might be encountered with a system employing a single washer alone and thus mitigates the risk of electrically isolated portions coming into contact with each other.

The valve assembly of the present invention has a further advantage that, in the event of a fire, the thermally resistant washers resist fire damage so as to ensure that the electrical isolation is maintained.

For the avoidance of doubt, the term "pair of washers" does not preclude the presence of a greater number (odd or even) of washers. The valve assembly of the present invention may comprise three washers, four washers, five washers, or more, depending on the application. Additionally, the term "within" as used to define the relationship between the first and second tubular members is not necessarily to be interpreted as meaning completely within. The valve assembly of the present invention may have a tubular member which is located only partially within the other tubular member, or may have a tubular member which is located completely within the other tubular member.

The valve unit, the first tubular member and/or the second tubular member may be constructed of metal. The metal may be steel, copper, brass, aluminium or iron, as are conventional materials used in gas pipework. In certain embodiments these parts should be capable of withstanding temperatures of about 820°C, as is typically encountered during a normal fire test.

The second tubular member may have a threaded internal bore for connection to a threaded gas supply line. The internal bore may be tapered to improve the seal of the connection with the supply line.

The valve assembly may be arranged so that the first tubular member surrounds the second. Alternatively the valve assembly may be arranged so that the second tubular member surrounds the first.

The valve assembly provides a fluid connection between an inlet gas supply line and gas pipework for a residential building. The assembly should provide a hermetically sealed connection to avoid a gas leak of fluid flowing therethrough. Suitably, the assembly may comprise sealing gaskets, such as O-rings, so as to improve the hermetic seal of the assembly. Such gaskets might be placed, for example, between the washers and the tubular member(s) and/or in the valve unit.

The first and/or second tubular members may be engageable with one or both of the washers in the pair to restrict relative axial movement of the respective tubular member(s) within the connection fitting. Such an engagement provides resistance against the first and second tubular members becoming dislodged from another, which could otherwise result in a substantial gas leak. The first and/or second tubular members may be provided in a clamping relationship with one or both washers in the pair. The first and/or second tubular members may be provided in an abutting relationship with one or both washers in the pair. Suitably, the first tubular member comprises a first retaining lip and/or the second tubular member comprises a second retaining lip, one or both washers in the pair being provided therebetween. The lip may take the form of a recess, flange, groove, etc.

One or both washers in the pair may be stepped washers having an inner and/or outer circumferential flange.

The electrically insulating, thermally resistant material is a ceramic material. The ceramic material is preferably selected from the group consisting of sintered boron nitride and alumina.

The assembly may further comprise a third tubular member locatable in the spacing between the pair of washers, the third tubular member being composed of an electrically insulating material, such as plastic. Suitable plastic materials include those having high strength and toughness grades, and which also have high dielectric strength, such as engineering plastics including polyoxymethylene (acetal). Such a third tubular member can be shaped to provide rotational resistance to the connection fitting as described more fully below.

The first, second and third tubular members may be configured so that relative rotation therebetween is restricted or prevented. Thus, for example, the first, second and third tubular members may have complementary adjacent facing surfaces which either contact each other or are in closely spaced relationship and which are configured for restricting or preventing relative rotation. These surfaces may be polygonal (e.g. octagonal) as seen transverse to the longitudinal axis of the respective member. In such an embodiment, the first tubular member may be rotatably fixed relative to the second and third tubular members. In this instance, the connection fitting is able to resist rotational movement applied when installing a fluid supply line into the second tubular member. In particular, rotational movement of the second tubular member is resisted by the fact that its outer surface contacts with the inner surface of the third tubular member, which in turn is prevented from rotation by virtue of contact of its outer surface with the inner surface of the first tubular member.

Having tubular members shaped and arranged in this manner allows the assembly to resist rotational loads (such as might be applied when a fluid supply line is connected to the second tubular member *via* a threaded engagement) by cooperating abutment of the facing surfaces of each of the tubular members.

The first tubular member may be snap- or screw-fittable onto the valve unit for ease of connection.

The first, second and or third tubular members may be formed of two or more pieces. The pieces may be connectable together using snap-fit connections, screw-fit connections or the like. The aforementioned features described in connection with each of the respective tubular members may, where appropriate, relate to one or more of the pieces. In embodiments where the first tubular member is formed of two pieces, for example, the first piece may be integral with the valve unit while the second piece may be separable from the valve unit. In such an example the second piece may be fittable (e.g. snap fittable or screw fittable) onto the first piece.

In embodiments where screw-fit connections are used, thread-locking adhesive may be provided in the connection to restrict movement further.

For a better understanding, the present invention will now be more particularly described, by way of non-limiting example only, with reference to and as shown in the accompany schematic drawings (not to scale) in which:
Fig. 1 is a schematic side sectional view of a first embodiment of a safety valve assembly in accordance with the invention;
Fig. 2 is the same schematic side sectional view of the embodiment of the safety valve assembly shown in Fig. 1;
Fig. 3 is an end view of the connection fitting of the safety valve assembly shown in Figs. 1 and 2, with certain parts cut away;
Fig. 4 is a schematic side sectional view of the outer nut of the safety valve assembly shown in Figs. 1-3;
Fig. 5 is a schematic side sectional view of a second embodiment of a safety valve assembly in accordance with the invention;
Fig. 6 is a schematic perspective view of a kit of parts for the connection fitting of the safety valve assembly shown in Fig. 5; and
Fig. 7 is a schematic side sectional view of a third embodiment of a safety valve assembly in accordance with the invention.

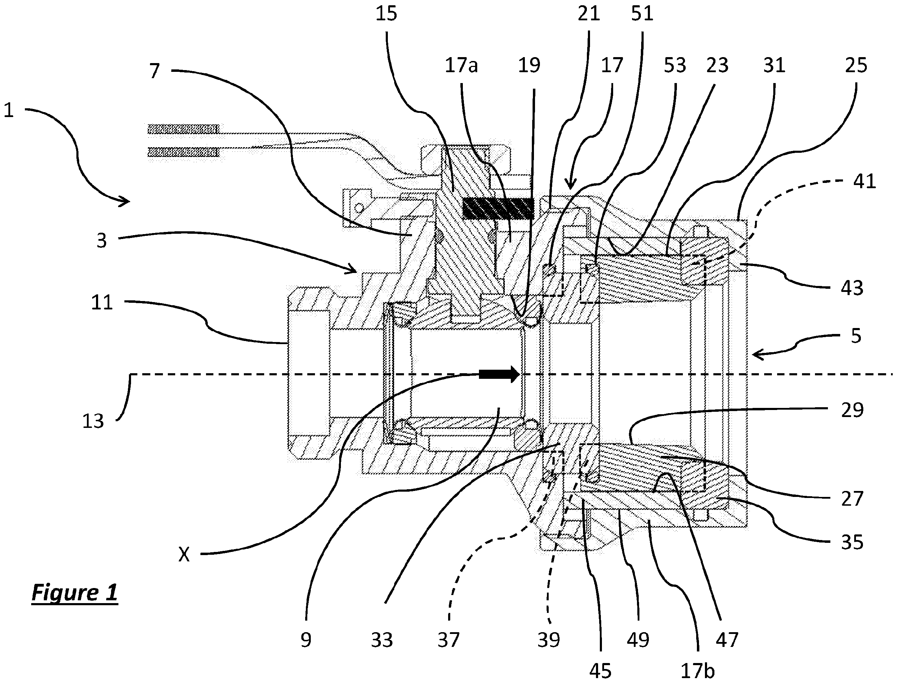

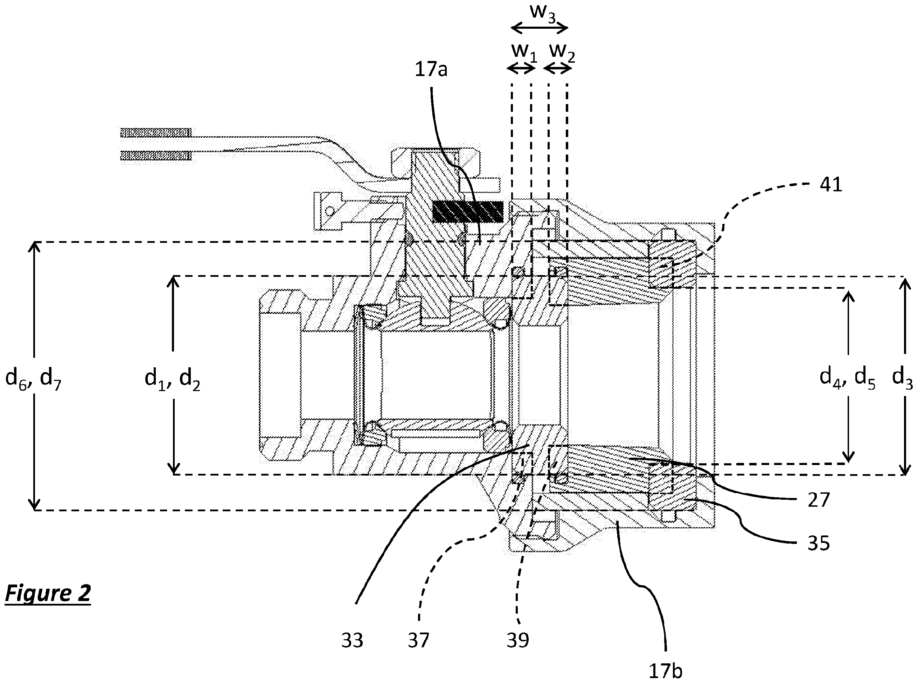

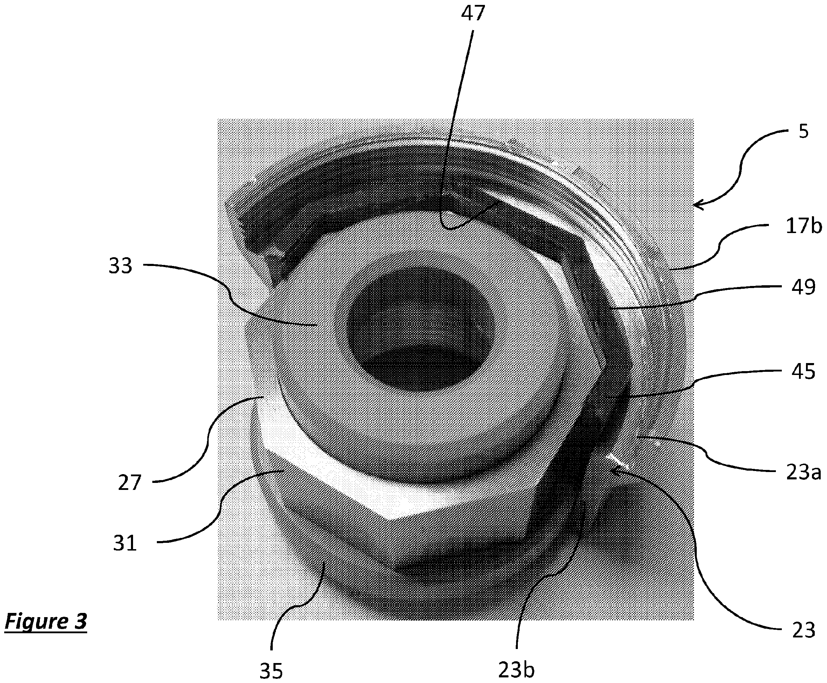

Figs. 1 and 2 illustrate a first embodiment of a safety valve assembly 1 in accordance with the invention comprising a valve unit 3 for regulating fluid flow and a connection fitting 5 for fluidly connecting the valve unit 3 to a fluid supply line (not illustrated). The connection fitting 5 of the safety valve assembly 1 shown in Figs. 1 and 2 is also shown in Fig. 3, which illustrates a partially cutaway end view of the connection fitting 5 as seen in the direction of arrow X (Fig. 1). The valve unit 3 comprises a metal housing 7 having an inlet end 9 and an outlet end 11 which define an axis 13 therebetween. A valve 15 is provided between the inlet 9 and outlet 11 ends of the valve unit 3. The connection fitting 5 is comprised of a stack of parts, described in more detail below, configured so as to electrically isolate an inlet fluid supply line from the valve unit 3 and thereby outlet pipework (not illustrated) connected thereto.

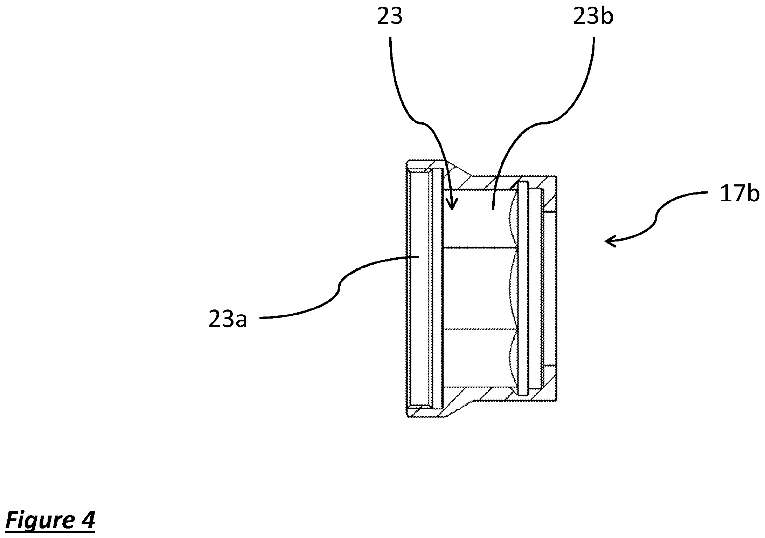

The connection fitting 5 comprises a first tubular member 17, which is a two piece metal construction comprising a first tubular piece 17a (hereafter "integral tube"), having inner 19 and outer 21 surfaces, integral with the metal housing 7 of the valve unit 3, and a second piece in the form of an outer tubular nut 17b, having inner 23 and outer 25 surfaces, which is screw fit onto the outer surface 21 of integral tube 17a. The outer tubular nut 17b of the connection fitting 5 shown in Figs. 1-3 is also shown in Fig. 4. Outer tubular nut 17b and integral tube 17a are adhered together using a thread-locking adhesive to restrict separation by relative rotation. Together, the integral tube 17a and the outer nut 17b define a tubular passageway connected to the inlet end 9 of the valve unit 3. The internal diameter of the integral tube 17a is smaller than that of the outer nut 17b, as described in greater detail below.

The connection fitting 5 further comprises a second tubular member in the form of a tubular metal insert 27, having inner 29 and outer 31 surfaces, located coaxially and completely within the outer nut 17b. The insert 27 has a threaded tapered internal bore (tapering not shown) for connection to a fluid supply line and has a similar internal diameter to that of the integral tube 17a.

The first tubular member 17 and the insert 27 are maintained in non-contacting relationship with, and electrically isolated from, one another by means of a pair of ceramic washers 33, 35. Washers 33, 35 are coaxial with and located between the first tubular member 17 and the insert 27 so as to maintain the first tubular member 17 and the insert 27 in said non-contacting arrangement relative to one another. The washer 33 is located axially between the integral tube 17a and the insert 27. The washer 35 is in an axially spaced relationship relative to the washer 33 and is located radially between the outer nut 17b and the insert 27. The location and composition of the washers 33, 35 ensures that the first tubular member 17 and the insert 27 are electrically isolated from one another. In addition, the axially spaced relationship of the washers 33, 35 gives the assembly 1 resistance to mechanical bending loads.

The washers 33, 35 are each engaged with both the first tubular member 17 and the insert 27 so as to restrict movement within the connection fitting 5. The engagement with each of the washers 33, 35 is provided by cooperating abutments 37, 39, 41, 43 formed on surfaces of the first tubular member 17 and the insert 27 as explained more fully below.

The washer 33 is engaged with the integral tube 17a of the first tubular member 17 and the insert 27. This engagement is made by means of abutments in the form of first 37 and second 39 circumferential recesses, as indicated by dashed lines. The first 37 and second 39 circumferential recesses are provided on internal surfaces 19 and 29 of the integral tube 17a and the insert 27 respectively. The first circumferential recess 37 is provided on the inner surface 19 of integral tube 17a at an end thereof which is distal to valve unit 3. A second circumferential recess 39 is provided on the inner surface 29 of the insert 27 adjacent an end thereof which is proximate the valve unit 3. The washer 33 is located with a portion in each of the first 37 and second 39 circumferential recesses and axially between the integral tube 17a and insert 27 and abuts against each of the integral tube 17a and the insert 27.

The washer 35 is engaged with the outer nut 17b of the first tubular member 17 and the insert 27. This engagement is made by means of a third circumferential recess 41, as indicated by dashed lines, provided on the outer surface 31 of the insert 27 and a flange 43 extending inwardly from the inner surface 23 of the outer nut 17b. The third recess 41 is provided on the insert 27 at an end thereof which is distal to the inlet end 9 of the valve unit 3. The flange 43 extends from an end of the outer nut 17b which is distal to the inlet end 9 of the valve unit 3. The washer 35 abuts against each of the third circumferential recess 41, the flange 43 and the inner surface 23 of outer nut 17b.

As shown in greater detail in Fig. 2, which only has certain features labelled for clarity, the outer radial diameters d₁, d₂ of the first 37 and second 39 circumferential recesses respectively are substantially the same as an outer radial diameter d₃ of the washer 33, so as to form a close fit therebetween. The sum of the axial widths w₁, w₂ of the first 37 and second 39 recesses respectively is less than the axial width w₃ of the washer 33 located therebetween. This maintains that the integral tube 17a and the insert 27 in an axially spaced relationship to one another (i.e. they do not touch) so as to ensure electrical isolation therebetween.

The washer 35 has an inner diameter d₄ which is substantially the same as an inner radial diameter d₅ of the third recess 41 so as to form a close fit therebetween. The washer 35 has an outer diameter d₆ which is substantially the same as an inner diameter d₇ of the outer nut 17b, similarly resulting in a close fit therebetween. The outer diameter d₆ of the washer 35 is greater that the radial diameter d₅ of the third circumferential recess 41. This maintains that outer nut 17b and the insert 27 in a radially spaced relationship to one another (i.e. do they not touch) so as to ensure electrical isolation therebetween.

The relationships between the diameters of the circumferential recesses 37, 39, 41; the outer nut 17b; and the washers 33, 35 facilitate assembly while also ensuring that the parts remain concentric once assembled.

Referring again to Fig. 1, the arrangement of the washers 33, 35 defines a circumferential spacing between the first tubular member 17 and insert 27. A third tubular member 45, having inner 47 and outer 49 surfaces, is provided in the circumferential spacing. The third tubular member 45 is composed of plastic and thus does not compromise the electrical isolation between the first 17 and second 27 tubular members.

As can be best appreciated from Fig. 3, the outer surface 31 of the insert 27 and the inner 47 and outer 49 surfaces of the third tubular member 45 are of octagonal transverse cross-section. As is best shown in Fig. 4, the outer nut 17b has an inner surface 23 which has a first portion 23a of circular cross section and second portion 23b of octagonal cross section. When assembled, the outer nut 17b is rotatably fixed relative to the insert 27 and third tubular member 45.

The outer nut 17b, the third tubular member 45 and the insert 27 are in a nested arrangement. Insert 27 has an octagonal outer surface 31 which nests concentrically within, and in contact with, the octagonal inner surface 47 of third tubular member 45. Similarly, the third tubular member 45 has an octagonal outer surface 49 which nests concentrically within, and in contact with, the second octagonal portion 23b of the inner surface 23 of the outer nut 17b. The outer surface 31 of the insert 27 and the inner surface 47 of the third tubular member 49 are, therefore, mutually complementary so that the former surface is in contact with the latter. Similarly, the outer surface 49 of the third tubular member 45 and the second octagonal portion 23b of inner surface 23 the outer nut 17b are mutually complementary so that the former surface is in contact with the latter surface. Although, in this embodiment, the aforementioned surfaces are in contact with one another, they could equally be in closely spaced relationship with one another.

The arrangement is such that the connection fitting 5 is able to resist rotational movement applied when installing a fluid supply line (not shown) into the insert 27. In particular, rotational movement of the insert 27 is resisted by the fact that its octagonal outer surface 31 is in contact with the octagonal inner surface 47 of the third tubular member 45 which in turn is prevented from rotation by virtue of the contact of its octagonal outer surface 49 with the octagonal inner surface portion 23b of the outer nut 17b, the latter being non-rotatably fixed to the integral tube 17a.

The valve assembly 1 further comprises O-rings 51 and 53 disposed around the washer 33 so as to improve the hermetic seal of the assembly 1.

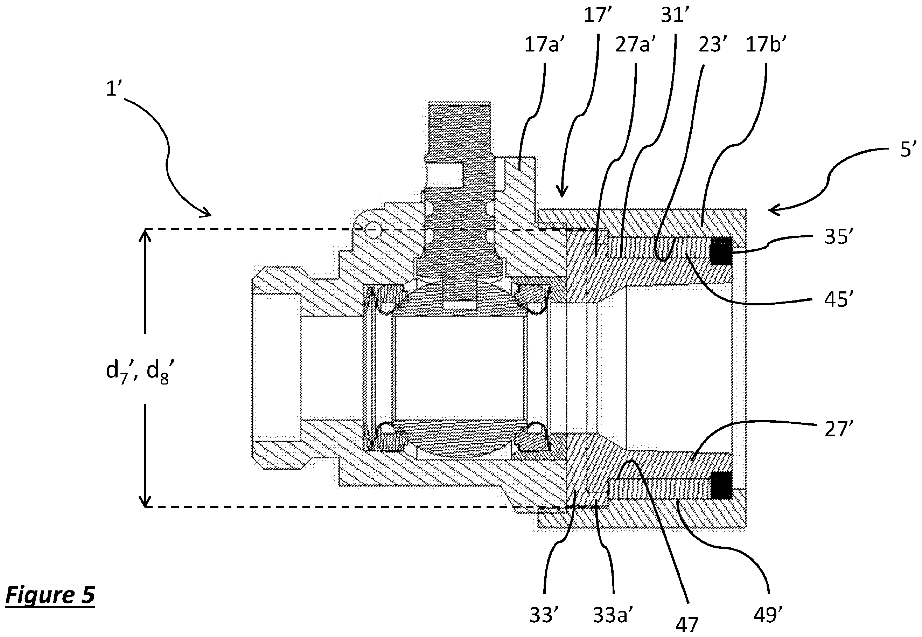

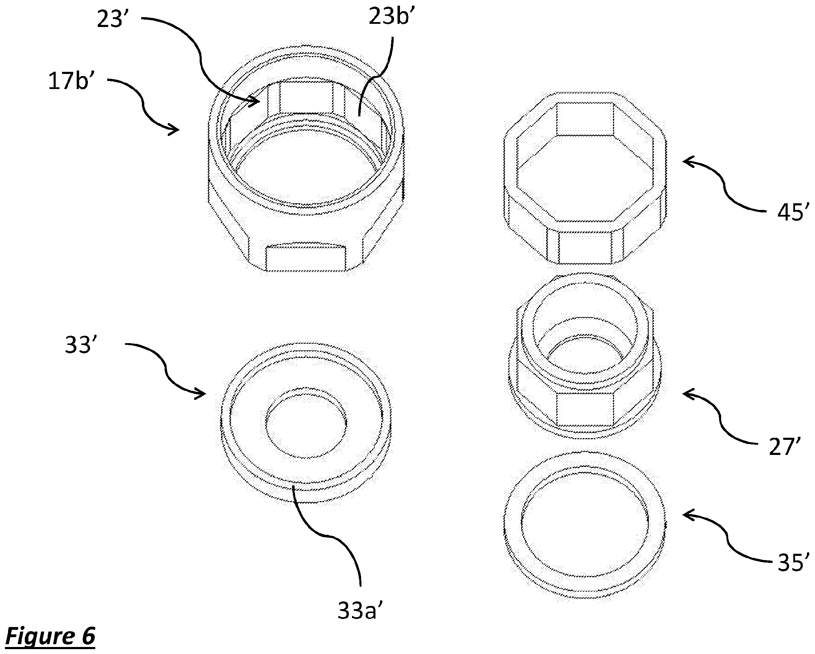

Fig. 5 shows a second embodiment of a safety valve assembly 1' in accordance with the invention. A kit of parts for the connection fitting of the safety valve assembly 1' of Fig. 5 is shown in Fig. 6. The assembly of the second embodiment is similar to the first embodiment shown in Figs. 1 to 4 and only the differences between the two assemblies will be described in detail below. In Figs. 5 and 6 the components corresponding to those described above in relation to Figs. 1 to 4 take the same reference number but suffixed with a prime symbol (').

As with the first embodiment shown in Figs. 1 to 4, the first tubular member 17' and the insert 27' of the safety valve assembly 1' of Fig. 5 are maintained in non-contacting relationship with, and electrically isolated from, one another by means of a pair of axially spaced ceramic washers 33', 35'. The non-contacting relationship differs from that in Figs. 1 to4 as explained more fully below.

The washer 33' is located within outer nut 17b' and axially between integral tube 17a' and the insert 27'. The inner diameter d_{7'} of the outer nut 17b' is the same as the outer diameter d_{8'} of the washer 33' so as to form a close fit therebetween. A circumferential flange 33a' is provided around the outer circumference of the washer 33' and extends towards the end of the outer nut 17b' which is distal from the valve unit 3'. The circumferential flange 33a' surrounds a complementarily shaped circumferential lip 27a' provided around the outer surface 31' of the insert 27'. Thus, the outer nut 17b' and the insert 27' are separated from one another in a non-contacting relationship by means of the circumferential flange 33a' located therebetween.

As best shown Fig. 6, a second portion 23b' of an inner surface 23' of the outer nut 17b' , the outer surface 31' of the insert 27' and the inner 47' and outer 49' surfaces of the third tubular member 45' are of octagonal polygonal cross-section. When assembled, the outer nut 17b' is rotatably fixed relative to the insert 27' and third tubular member 45'.

As with the first embodiment discussed in relation to Figs. 1 to 4 above, the outer nut 17b', the third tubular member 45' and the insert 27' are in a nested arrangement such that the connection fitting 5' is able to resist rotational movement applied when installing a fluid supply line (not shown) into the insert 27'.

In the event of a fire, the plastic third tubular member 45, 45' and O-rings 51 and 53 may be destroyed. The ceramic (i.e. thermally resistant) washers 33, 33', 35, 35' are, however, maintained, such that the electrical isolation remains intact.

When installing the valve assembly 1, 1', a fluid supply line is screwed into the threaded internal bore of the insert 27, 27'. The connection fitting 5, 5' resists the rotational movement applied while screwing in said fluid supply line due to the nested arrangement resulting in contact of complementary facing surfaces of each of the first tubular member 17, 17', the insert 27, 27' and the third tubular member 45, 45'. In particular, rotational movement of the insert 27, 27' is resisted by the fact that its octagonal outer surface 31, 31' is in contact with the octagonal inner surface 47, 47' of the third tubular member 45, 45' which in turn is prevented from rotation by virtue of the contact of its octagonal outer surface 49, 49' with the octagonal inner surface portion 23b, 23b' (see Fig. 6 for 23b') of the outer nut 17b, 17b' the latter being non-rotatably fixed to the integral tube 17a, 17a'.

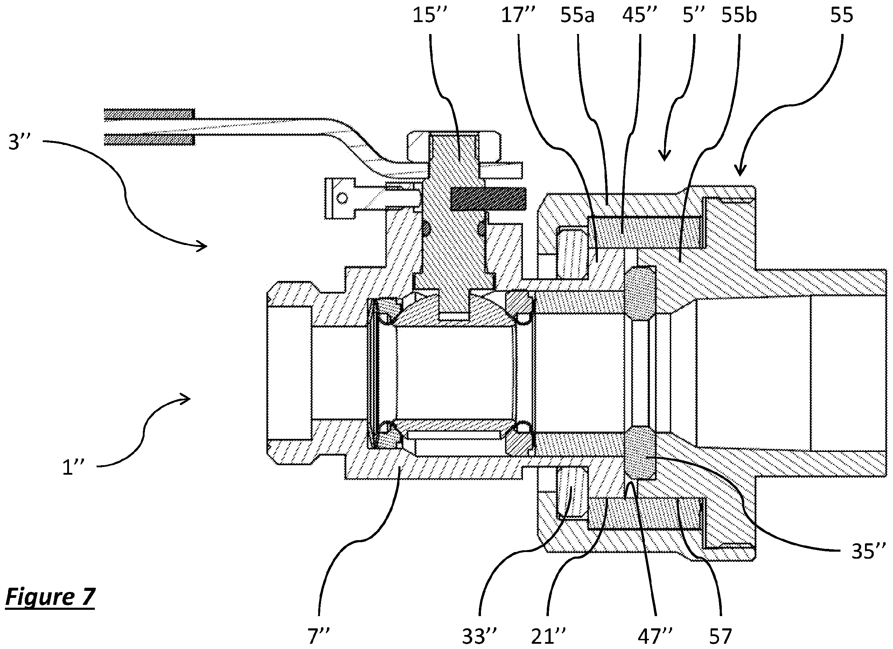

Fig. 7 shows a third embodiment of a safety valve assembly 1" in accordance with the invention. The assembly of the third embodiment is similar to those shown in Figs. 1 to 6 and only the substantive differences between the assemblies will be described in detail below. In Fig. 7, the components corresponding to those described above in relation to Figs. 1 to 6 take the same reference number but suffixed with a double prime symbol (").

As with the assemblies shown in Figs. 1 to 6, the safety valve assembly 1" in accordance with the third embodiment of the invention comprises a valve unit 3" having a valve 15", and a connection fitting 5". The connection fitting 5" differs from that shown in Figs. 1 to 6 as explained more fully below.

The connection fitting 5" comprises a first tubular member 17", which is a single piece metal construction integral with the metal housing 7" of the valve unit 3". The connection fitting 5" further comprises a second tubular member in the form of a tubular metal sleeve 55. Sleeve 55 is a two-part construction comprising a first portion 55a located coaxially around the first tubular member 17" and a second portion 55b screw-fit into an inner surface of first portion 55a. The second portion 55b of sleeve 55 has a threaded internal bore for connection to fluid supply line (not illustrated).

As with the assemblies shown in Figs. 1 to 6, the arrangement of the washers 33", 35" defines a circumferential spacing between the first tubular member 17" and sleeve 55. A third tubular member 45" is provided in the circumferential spacing. In addition, the axially spaced relationship of the washers 33", 35" gives the assembly 1" resistance to mechanical bending loads.

The inner surface 47" of the third tubular member 45" is of octagonal cross-section. Similarly, parts of the outer surface 21" of the first tubular member 17", and of the outer surface 57 of the second portion 55b of the sleeve 55, which face the inner surface 47" of the third tubular member 45", are of complementary octagonal cross-section. The connection fitting 5" resists rotational movement applied while screwing in said fluid supply line through contact of these facing surfaces 47", 21", 57 in a similar manner to that discussed above in relation to the assemblies shown in Figs. 1 to 6.

## Claims

1. A safety valve assembly (1; 1'; 1") for connection to a fluid supply line, comprising:
i) a valve unit (3; 3"), having a first end (9) and a second end (11) defining an axis (13) therebetween, said valve unit comprising a valve (15; 15") between said first and second ends; and
ii) a connection fitting (5; 5'; 5") for fluidly connecting the first end of the valve unit to the fluid supply line, the connection fitting comprising:
a) a first tubular member (17, 17'; 17") fittable to, or integral with, the first end of the valve unit,
b) a second tubular member (27; 27'; 55) adapted for receiving the fluid supply line, and
c) a pair of washers (33, 35; 33', 35'; 33", 35") locatable between said first and second tubular members so as to maintain the first tubular member in a non-contacting arrangement relative to the second tubular member to restrict relative movement therebetween;
wherein one of the first and second tubular members is locatable within the other tubular member, wherein each washer in the pair of washers is positioned in an axially spaced relationship relative to the other washer, and wherein each washer is composed of an electrically insulating, thermally resistant material, thereby enabling electrical isolation of the first and second tubular members (17, 27; 17', 27'; 17", 55) from one another and wherein the electrically insulating, thermally resistant material is a ceramic material.

2. A safety valve assembly according to claim 1, wherein the first and/or second tubular members (17, 27; 17', 27'; 17", 55) are engageable with one or both of the washers (33, 35; 33', 35'; 33", 35") in the pair to restrict relative axial movement of the respective tubular member(s) within the connection fitting (5; 5'; 5").

3. A safety valve assembly according to claim 2, wherein the first and/or second tubular members (17, 27; 17', 27'; 17", 55) are provided in an abutting relationship with one or both washers (33, 35; 33', 35'; 33", 35") in the pair.

4. A safety valve assembly according to claim 3, wherein the first tubular member comprises a first retaining lip and/or the second tubular member comprises a second retaining lip (27a'), one or both washers in the pair being provided therebetween.

5. A safety valve assembly according to claim 2, wherein the first and/or second tubular members are provided in a clamping relationship with one or both washers in the pair (33, 35; 33', 35'; 33", 35").

6. A safety valve assembly according to claim 1, wherein the ceramic material is sintered boron nitride or alumina.

7. A safety valve assembly according to any one of claims 1 to 6, wherein the assembly further comprises a third tubular member (45; 45'; 45") locatable in the spacing between the pair of washers (33, 35; 33', 35'; 33", 35"), the third tubular member being composed of an electrically insulating material.

8. A safety valve assembly according to claim 7, wherein the electrically insulating material of the third tubular member is an engineering plastic; and, wherein said engineering plastic is optionally polyoxymethylene (acetal).

9. A safety valve assembly according to any one of claims 7 to 8, wherein the first, second and third tubular members (17, 27, 45; 17', 27', 45'; 17", 55, 45") have complementary adjacent facing surfaces (31, 47, 49, 23b; 31', 47', 49', 23b'; 47") which contact each other, or are in closely spaced relationship, and which are configured for restricting or preventing relative rotation between the first, second and third tubular members (17, 27, 45; 17', 27', 45'; 17", 55, 45").

10. A safety valve assembly according to claim 9, wherein each of the facing surfaces (31, 47, 49, 23b; 31', 47', 49', 23b'; 47") is of polygonal transverse cross-section; and, wherein said polygonal transverse cross-section is optionally octogonal.

11. A safety valve assembly according to any one of claims 1 to 10, wherein the first tubular member (17; 17') is formed of two pieces (17a, 17b; 17a', 17b').

12. A safety valve assembly according to claim 11, wherein the first piece (17a; 17a') is integral with the valve unit (3; 3') and wherein the second piece (17b, 17b') is screw-fittable onto the first piece.

13. A safety valve assembly according to any one of claims 1 to 12, wherein the first tubular member is screw-fittable onto the valve unit.

14. A safety valve assembly according to any one of claims 1 to 13, wherein the first tubular member (17; 17') surrounds the second (27, 27') or wherein the second tubular member (55) surrounds the first (17").

## Patentansprüche

1. Sicherheitsventilanordnung (1; 1'; 1 ") zur Verbindung mit einer Fluidzufuhrleitung, Folgendes beinhaltend:
i) eine Ventileinheit (3; 3"), welche ein erstes Ende (9) und ein zweites Ende (11) besitzt, welche eine Achse (13) dazwischen definieren, wobei die Ventileinheit ein Ventil (15; 15") zwischen dem ersten und dem zweiten Ende beinhaltet; und
ii) eine Verbindungsarmatur (5; 5'; 5") zum fluidischen Verbinden des ersten Endes der Ventileinheit mit der Fluidzufuhrleitung, wobei die Verbindungarmatur Folgendes beinhaltet:
a) ein erstes röhrenförmiges Element (17, 17'; 17"), welches am ersten Ende der Ventileinheit angebracht werden kann oder damit einstückig verbunden ist,
b) ein zweites röhrenförmiges Element (27; 27'; 55), welches geeignet ist, um die Fluidzufuhrleitung aufzunehmen, und
c) ein Paar Unterlegscheiben (33, 35; 33', 35'; 33", 35"), welche zwischen dem ersten und dem zweiten röhrenförmigen Element angeordnet werden können, um das erste röhrenförmige Element in einer kontaktlosen Anordnung in Bezug auf das zweite röhrenförmige Element zu halten, um eine relative Bewegung dazwischen zu beschränken;
wobei eines von dem ersten und dem zweiten röhrenförmigen Element innerhalb des anderen röhrenförmigen Elements befindlich sein kann, wobei jede Unterlegscheibe in dem Paar Unterlegscheiben in einer axial beabstandeten Beziehung in Bezug auf die andere Unterlegscheibe positioniert ist, und wobei jede Unterlegscheibe aus einem elektrisch isolierenden, wärmebeständigen Material besteht, wodurch sie elektrische Isolation des ersten und des zweiten röhrenförmigen Elements (17, 27; 17', 27'; 17", 55) einander gegenüber ermöglicht und wobei das elektrisch isolierende, wärmebeständige Material ein Keramikmaterial ist.

2. Sicherheitsventilanordnung nach Anspruch 1, wobei das erste und/oder das zweite röhrenförmige Element (17, 27; 17', 27'; 17", 55) mit einer oder beiden der Unterlegscheiben (33, 35; 33', 35'; 33", 35") in dem Paar in Eingriff gehen kann/können, um relative axiale Bewegung des jeweiligen röhrenförmigen Elements/der jeweiligen röhrenförmigen Elemente innerhalb der Verbindungarmatur (5; 5'; 5") zu beschränken.

3. Sicherheitsventilanordnung nach Anspruch 2, wobei das erste und/oder das zweite röhrenförmige Element (17, 27; 17', 27'; 17", 55) in einer anliegenden Beziehung mit einer oder beiden Unterlegscheiben (33, 35; 33', 35'; 33", 35") in dem Paar bereitgestellt sind.

4. Sicherheitsventilanordnung nach Anspruch 3, wobei das erste röhrenförmige Element eine erste Zurückhaltelippe beinhaltet und/oder das zweite röhrenförmige Element eine zweite Zurückhaltelippe (27a') beinhaltet, wobei eine oder beide Unterlegscheiben in dem Paar dazwischen bereitgestellt sind.

5. Sicherheitsventilanordnung nach Anspruch 2wobei das erste und/oder das zweite röhrenförmige Element in einer klemmenden Beziehung mit einer oder beiden Unterlegscheiben in dem Paar (33, 35; 33', 35'; 33", 35") bereitgestellt ist/sind.

6. Sicherheitsventilanordnung nach Anspruch 1, wobei das Keramikmaterial gesintertes Bornitrid oder Aluminiumoxid ist.

7. Sicherheitsventilanordnung nach einem der Ansprüche 1 bis 6, wobei die Anordnung zudem ein drittes röhrenförmiges Element (45; 45'; 45") beinhaltet, welches in dem Abstand zwischen dem Paar von Unterlegscheiben (33, 35; 33', 35'; 33", 35") befindlich sein kann, wobei das dritte röhrenförmige Element aus einem elektrisch isolierenden Material besteht.

8. Sicherheitsventilanordnung nach Anspruch 7, wobei das elektrisch isolierende Material des dritten röhrenförmigen Elements ein technischer Kunststoff ist; und, wobei der technische Kunststoff optionsweise Polyoxymethylen (Acetal) ist.

9. Sicherheitsventilanordnung nach einem der Ansprüche 7 bis 8, wobei das erste, das zweite und das dritte röhrenförmige Element (17, 27, 45; 17', 27', 45'; 17", 55, 45") komplementäre, aneinandergrenzende, einander zugewandte Oberflächen (31, 47, 49, 23b; 31', 47', 49', 23b' 47") aufweisen, welche miteinander in Kontakt gehen, oder in gering beabstandeter Beziehung angeordnet sind, und welche zum Beschränken oder Verhindern einer relativen Drehung zwischen dem ersten, dem zweiten und dem dritten röhrenförmigen Element (17, 27, 45; 17', 27', 45'; 17", 55, 45") konfiguriert sind.

10. Sicherheitsventilanordnung nach Anspruch 9, wobei jede der einander zugewandten Oberflächen (31, 47, 49, 23b; 31', 47', 49', 23b' 47") einen polygonalen Querschnitt aufweist; und wobei der polygonale Querschnitt optionsweise achteckig ist.

11. Sicherheitsventilanordnung nach einem der Ansprüche 1 bis 10, wobei das erste röhrenförmige Element (17; 17') aus zwei Teilen (17a, 17b; 17a', 17b') gebildet ist.

12. Sicherheitsventilanordnung nach Anspruch 11, wobei das erste Teil (17a; 17a') einstückig mit der Ventileinheit (3; 3') verbunden ist und wobei das zweite Teil (17b, 17b') an das erste Teil anschraubbar ist.

13. Sicherheitsventilanordnung nach einem der Ansprüche 1 bis 12, wobeidas erste röhrenförmige Element an die Ventileinheit anschraubbar ist.

14. Sicherheitsventilanordnung nach einem der Ansprüche 1 bis 13, wobei das erste röhrenförmige Element (17; 17') das zweite (27, 27') umgreift oder wobei das zweite röhrenförmige Element (55) das erste (17") umgreift.

## Revendications

1. Ensemble soupape de sûreté (1 ; 1' ; 1") pour raccordement à une conduite d'alimentation en fluide, comprenant :
i) une unité de soupape (3 ; 3"), présentant une première extrémité (9) et une seconde extrémité (11) définissant un axe (13) entre elles, ladite unité de soupape comprenant une soupape (15 ; 15") entre lesdites première et seconde extrémités ; et
ii) un raccord de connexion (5 ; 5' ; 5") permettant de raccorder de manière fluidique la première extrémité de l'unité de soupape à la conduite d'alimentation en fluide, le raccord de connexion comprenant :
a) un premier élément tubulaire (17 ; 17' ; 17") pouvant être adapté à la première extrémité de l'unité de soupape, ou d'un seul tenant avec celle-ci ;
b) un deuxième élément tubulaire (27 ; 27' ; 55) adapté afin de recevoir la conduite d'alimentation en fluide, et
c) une paire de rondelles (33, 35 ; 33', 35' ; 33", 35") pouvant être situées entre ledit premier et ledit second élément tubulaire de façon à maintenir le premier élément tubulaire dans un agencement sans contact relativement au deuxième élément tubulaire afin de limiter le mouvement relatif entre eux ;
dans lequel un du premier et du second élément tubulaire peut être situé dans l'autre élément tubulaire, dans lequel chaque rondelle dans la paire de rondelles est positionnée dans une relation espacée de manière axiale par rapport à l'autre rondelle, et dans lequel chaque rondelle est composée d'un matériau thermiquement résistant, isolant électriquement, permettant ainsi l'isolation électrique du premier et du second élément tubulaire (17, 27 ; 17', 27' ; 17", 55) l'un par rapport à l'autre et dans lequel le matériau thermiquement résistant, isolant électriquement est un matériau céramique.

2. Ensemble soupape de sûreté selon la revendication 1, dans lequel le premier et/ou le second élément tubulaire (17, 27 ; 17', 27' ; 17", 55) peuvent être mis en prise avec l'une ou les deux rondelles (33, 35 ; 33', 35' ; 33", 35") dans la paire afin de limiter un mouvement axial relatif du (des) élément(s) tubulaire(s) respectif(s) dans le raccord de connexion (5 ; 5' ; 5").

3. Ensemble soupape de sûreté selon la revendication 2, dans lequel le premier et/ou le second élément tubulaire (17, 27 ; 17', 27' ; 17", 55) sont fournis dans une relation de butée avec l'une ou les deux rondelles (33, 35 ; 33', 35' ; 33", 35") dans la paire.

4. Ensemble soupape de sûreté selon la revendication 3, dans lequel le premier élément tubulaire comprend un premier rebord de retenue et/ou le deuxième élément tubulaire comprend un second rebord de retenue (27a'), l'une ou les deux rondelles dans la paire étant ménagées entre ceux-ci.

5. Ensemble soupape de sûreté selon la revendication 2, dans lequel le premier et/ou le second élément tubulaire sont fournis dans une relation de fixation avec l'une ou les deux rondelles dans la paire (33, 35 ; 33', 35' ; 33", 35").

6. Ensemble soupape de sûreté selon la revendication 1, dans lequel le matériau céramique est un nitrure de bore fritté ou de l'alumine.

7. Ensemble soupape de sûreté selon l'une quelconque des revendications 1 à 6, dans lequel l'ensemble comprend en outre un troisième élément tubulaire (45 ; 45' ; 45") pouvant être situé dans l'espace entre la paire de rondelles (33, 35 ; 33', 35' ; 33", 35"), le troisième élément tubulaire étant composé d'un matériau électriquement isolant.

8. Ensemble soupape de sûreté selon la revendication 7, dans lequel le matériau électriquement isolant du troisième élément tubulaire est un plastique d'ingénierie ; et, dans lequel ledit plastique d'ingénierie est optionnellement un polyoxyméthylène (acétal).

9. Ensemble soupape de sûreté selon l'une quelconque des revendications 7 à 8, dans lequel le premier, le deuxième et le troisième élément tubulaire (17, 27, 45 ; 17', 27', 45' ; 17", 55, 45") présentent des surfaces exposées adjacentes complémentaires (31, 47, 49, 23b ; 31', 47', 49', 23b' ; 47") qui entrent en contact l'une avec l'autre, ou sont en relation étroitement espacées, et qui sont configurées afin de limiter ou de prévenir la rotation correspondante entre le premier, le deuxième et le troisième élément tubulaire (17, 27, 45 ; 17', 27', 45' ; 17", 55, 45").

10. Ensemble soupape de sûreté selon la revendication 9, dans lequel chacune des surfaces exposées (31, 47, 49, 23b ; 31', 47', 49', 23b' ; 47") est de coupe transversale polygonale ; et dans lequel ladite coupe transversale polygonale est optionnellement octogonale.

11. Ensemble soupape de sûreté selon l'une quelconque des revendications 1 à 10, dans lequel le premier élément tubulaire (17 ; 17') est formé de deux morceaux (17a, 17b ; 17a', 17b').

12. Ensemble soupape de sûreté selon la revendication 11, dans lequel le premier morceau (17a ; 17a') est d'un seul tenant avec l'unité de soupape (3 ; 3') et dans lequel le second morceau (17b, 17b') peut être adapté par vissage sur le premier morceau.

13. Ensemble soupape de sûreté selon l'une quelconque des revendications 1 à 12, dans lequel le premier élément tubulaire peut être adapté par vissage sur l'unité de soupape.

14. Ensemble soupape de sûreté selon l'une quelconque des revendications 1 à 13, dans lequel le premier élément tubulaire (17 ; 17') entoure le deuxième (27 ; 27') ou dans lequel le deuxième élément tubulaire (55) entoure le premier (17").
